# EUROPEAN PATENT SPECIFICATION

(11) **EP 2 843 967 B1**
(45) Date of publication and mention of the grant of the patent: **24.05.2017**
(21) Application number: 13306176.2
(22) Date of filing: 28.08.2013
(51) Int. Cl.: H04Q 11/00

(54) **Method for scheduling data through an optical burst switching network**
Verfahren zur Planung von Daten durch ein optisches Burst-Vermittlungsnetzwerk
Procédé de programmation de données via un réseau à commutation optique par rafales

(43) Date of publication of application: 04.03.2015
(73) Proprietor: ALCATEL LUCENT, 92100 Boulogne-Billancourt (FR)
(72) Inventor: Löhr, Jürgen, 70435 Stuttgart (DE)
(74) Representative: Wetzel, Emmanuelle

(56) References cited:
- EP-A1- 1 657 952
- US-A1- 2002 141 350
- US-A1- 2004 063 461
- US-A1- 2006 133 430
- US-A1- 2009 313 465
- US-A1- 2012 082 452

## Description

The present document relates to optical burst switching networks. In particular, the present document relates to a method and apparatus for scheduling data through an optical burst switching network in order to improve the usage of network resources.

In an optical burst switching (OBS) network, a basic switching unit is a data burst. The data burst is composed by many data packets, for example IP-packets. The OBS network typically includes a plurality of network nodes. In order to send an optical data burst through the OBS network, in a first step, data are arranged into a data burst. Said data arrangement is finished if the length of the data burst reaches a data length threshold required by the OBS network, or when a time-to-live of the data burst reaches a required time threshold. After the generation of a data burst is finished, the transmission of the data burst is scheduled.

According to a first scheduling scenario, a control packet is associated with each data burst. Preferably, the control packet is transmitted in optical form at a separated wavelength, namely the control channel, a period of time before sending the data burst. The control packet contains the necessary information for guiding the data burst though the OBS network. Thereby, a timely setup of an optical light path to transport the soon-to-arrive data burst is achieved. Following up, the data burst may be directly delivered from the source network node to the destination network node through the set-up optical light path pre-disposed by the control packet.

In an alternative scheduling scenario, the scheduling information may be determined, e.g. by a central scheduling instance handling all traffic demands in the OBS network, prior to the actual data transmission. The scheduling information is distributed from the central scheduling instance via any means, e.g. a separate communication network, to the network nodes, allowing subsequent data transmission via the OBS network. Thus all nodes receiving a data burst know in advance how to handle this burst, and no separate control packet per data burst is needed.

Typically, transmission of data bursts is scheduled directly from the source network node to the destination network node if sufficient network resources along the transmission path between the source network node and the destination network node, typically free time slots for transmitting the data burst, are available. Said scheduling is performed based on computational scheduling procedures which typically use a combination of good heuristics and optimization in order to obtain an optimized scheduling.

However, said scheduling procedures have a high computational complexity and still do not provide a sufficiently efficient, e.g. optimal, scheduling, i.e. it may happen that data bursts cannot be scheduled for transmission even if there are free network resources in the OBS network.

European patent application EP 1 657 952 A1 discloses an OBS ring network with a distributed network control amongst various nodes.

US Patent Application US 2002/0141350 A1 discloses a method for controlling burst switched network devices.

US Patent Application US 2004/0063461 A1 discloses an OBS network comprising buffering means for reducing burst overlapping.

Finally, US Patent Application US 2006/0133430 A1 discloses a load-balanced network architecture in which a traffic flow from a source node to a destination node via an intermediate node is split into parts wherein the parts are distributed to respective ones of the intermediate nodes.

Hence, there is a need to provide for an improved method for scheduling data through an OBS network which provides an improved data scheduling with reduced computational effort leading to an optimized usage of network resources. According to a first aspect, a method for scheduling data through an optical burst switching (OBS) network comprising a plurality of network nodes is described. The OBS network may comprise a ring structure or any other network topology. As a first step, a transmission request for transmitting data from a source network node to a destination network node is received. The transmission request may be a request for sending a set of data. Said data may be splitted into a plurality of data bursts to be optically transmitted as optical data bursts from the source network node to the destination network node.

In order to arrange the transmission of the data bursts a scheduling step is performed. The goal of the scheduling is to obtain a transmission path through which the optical data bursts may be transmitted from the source network node to the destination network node. While scheduling an intermediate network node different from the source network node and the destination network node is determined and transmission of at least a subset of the data, i.e. a subset of the plurality of data bursts to be transmitted from the source network node to the destination network node is scheduled from the source network node to the intermediate network node. Subsequently, the subset of data, respectively, the data bursts forming said subset of data, may be transmitted from the source network node to the intermediate network node.

After receiving said subset of data at the intermediate network node, a further scheduling step is performed or pre-configured scheduling information is used, namely the scheduling of the transmission of the subset of data from the intermediate network node to the destination network node. Finally the subset of data is transmitted from the intermediate network node to the destination network node. By means of said intermediate network node, it is possible to route the optical data bursts on an alternative transmission path comprising said intermediate network node. Thereby it is possible to substitute a transmission path suggested by a customary scheduling by an improved scheduling leading to an optimized network usage with lower costs per bandwidth and higher efficiency.

The scheduling of data from the source network node to the intermediate network node and the scheduling of data from the intermediate network node to the destination network node are independent of each other. In other words, by means of the intermediate node a decoupling of the scheduling on the first transmission path section from the source network node to the intermediate network node and the scheduling on the second transmission path section form the intermediate network node to the destination network node may be obtained. Thereby, the intermediate network node serves as an intermediate station for the data bursts and may buffer the data bursts until the scheduling for the second transmission path section enables the further transmission of the data bursts.

According to further embodiments, a first subset of data to be transmitted is scheduled directly from the source network node to the destination network node without scheduling via the intermediate node and at least a second subset of data is scheduled via the intermediate network node. The first subset of data may comprise a first set of data bursts and the second subset of data may comprise a second set of data bursts wherein the first and second set of data bursts contain the data correlated with the transmission request. As a first step, it may be attempted to schedule all data bursts correlated with the transmission request directly from the source network node to the destination network node, i.e., all optical burst data of the transmission request have to be scheduled from the source network node to the destination network node without being rescheduled, converted or buffered within an intermediate network node. Apparently, the result of the direct scheduling attempt depends on a plurality of parameters, specifically on the amount of optical data bursts to be transmitted at that point in time and the load of the transmission path which should be chosen according to the scheduling.

If a direct scheduling of at least a subset of data from the source network node to the destination network node is not possible e.g. due to high load of the transmission path or conflicting scheduling of other transmission requests at source network node and destination network node, at least one intermediate network node different from the source network node and the destination network node is determined. After determining the intermediate network node, the transmission of the subset of data (at least one optical data burst of the whole set of optical data bursts associated with the transmission request) which is not able to be directly scheduled from the source network node to the destination network node is scheduled indirectly via said intermediate network node. Subsequently, said subset of data is transmitted according to said indirect scheduling. The subset of data may be constituted by all optical data bursts of the respective transmission request or only a part of said optical data bursts.

After said subset of data has been received at the intermediate network node, or using pre-configured scheduling information, the transmission of said subset of data from the intermediate network node to the destination network node is scheduled and the optical data bursts correlated with said subset are transmitted according to said second scheduling.

According to further embodiments, the intermediate network node is chosen by determining a plurality of network nodes distinct from the source network node and the destination network node. For each determined network node, it is determined if a first transmission between the source network node and said determined network node is possible. Furthermore parameters regarding the Quality of Service (QoS) of said first transmission may be determined, e.g. transmission latency, availability, average load etc... In addition, for each determined network node, it is determined if a second transmission between said determined network node and the destination network node is possible. Furthermore parameters regarding the Quality of Service (QoS) of said second transmission may be determined, e.g. transmission latency, availability, average load etc...

After determining the QoS-parameters for the first and second transmission, the determined network nodes for which first and second transmissions are possible may be ranked based on said QoS-parameters of first and second transmissions. The determined network node with the optimum Quality of Service is chosen as intermediate network wherein for evaluating the Quality of Service, the QoS-parameters of the first and second transmissions are taken into account. For example, the intermediate network node is chosen, which provides the lowest latency, i.e. the sum of latencies of first and second transmissions is minimal. Alternatively, the intermediate network node may be chosen based on the lowest total load on the two links between the involved network nodes. Alternatively, an intermediate network node may be chosen that allows scheduling of further traffic requests between the involved nodes. Thus, it is possible to choose the intermediate network node which provides transmission paths with an optimized quality of service.

Alternatively, it is possible to choose the intermediate network node out of the plurality of network nodes arbitrarily, i.e. a random selection of a particular network node out of the plurality of network nodes is performed. Furthermore, it is possible to choose the intermediate network node out of the plurality of network nodes based on statistical information. For example, information of previous transmissions is statistically analyzed based on certain criteria for selecting the intermediate network node. Said criteria may be, for example, the probability of successful transmission via the respective network node.

According to further embodiments, all available network nodes except the source network node and the destination network node are used for determining the intermediate network node. Thereby it is possible to determine the optimal intermediate network node out of all available network nodes. Alternatively, it is also possible to choose a reduced set of network nodes (also excluding the source network node and the destination network node). Said reduced set may be obtained by empirical values based on a prior indirect scheduling, or based on information on the network topology which helps to select a number of network nodes as candidates for becoming an intermediate node. Alternatively, it is also possible to consider all potential intermediate nodes in a certain sequence and select the first node that allows supporting the end-to-end traffic request. Alternatively, it is also possible to statistically select any node out of the set of potential intermediate nodes that allows supporting the end-to-end traffic request.

According to further embodiments, the transmission request is scheduled via at least two intermediate network nodes. So even if a direct transmission from the source network node to the destination network node and an indirect transmission via a single intermediate network node is not possible due to occupied network resources, it is possible to provide additional transmission options without refusing a transmission request. Thus, the network efficiency is further enhanced.

According to further embodiments, a further intermediate network node is determined if scheduling of the transmission of the subset of data between the intermediate network node and the destination network node is not possible within a predefined Quality of Service (QoS) and at least a portion of the subset of data are scheduled via the further intermediate network node. In this context, QoS means, for example, high latencies due to high load on the respective transmission path, or poor availability of the respective transmission path. The subset of data, i.e. at least one data burst correlated with the transmission request, which cannot be scheduled via the intermediate network node is scheduled via the further intermediate network node. In other words, a multi-level scheduling is used. If the transmission path via a single intermediate network node is not able to ensure the transmission of the whole set of data bursts corresponding to a transmission request, a further transmission path is used for transmitting the remaining data bursts.

According to further embodiments, the at least two intermediate network nodes are chosen based on a ranking providing information regarding the QoS of the respective intermediate network node, respectively, the QoS of the transmission paths to/from the respective intermediate network node. Thereby, the multi-level scheduling leads to a QoS-optimized transmission from the source network node to the destination network node even in network environments with high network load in which customary scheduling schemes trying to schedule transmission requests directly from the source network node to the destination network node may typically reject a plurality of said transmission requests. Alternatively, the selection of at least two intermediate nodes may be done following a sequential consideration or a statistical selection as described above for the selection of one intermediate node.

According to further embodiments, data are rescheduled within the intermediate network node. In other words, the intermediate network node provides means for decoupling the scheduling on the first transmission path section form the source network node to the intermediate network node from the scheduling on the second transmission path section from the intermediate network node to the destination network node. Said rescheduling may comprise a conversion from a transmission in a first time slot to a transmission in a second time slot different to the first one.

Additionally, the data may be buffered within the intermediate network node. This allows that the transmissions of the data bursts on the first and second transmission path section are temporally decoupled from each other. The intermediate network node may comprise a buffer module for buffering the data bursts. The buffer module forms a repository in which data bursts are stored until the scheduling enables a further transmission to a further intermediate network node, respectively, to the destination network node. After transmission on the second transmission path to the destination, the data busts may be deleted from the buffer of the intermediate node.

According to further embodiments, data are buffered in the electrical domain using a first-in-first-out (FIFO) repository. This FIFO repository may be organized to be a single FIFO for all bursts to be buffered, or as separate logical FIFOs for each of the transmission relations between a source network node and a destination network node, or as separate logical FIFOs where each FIFO buffers the bursts of several transmission relations. So, the data bursts which have been stored first will be also output first. Preferably, the data bursts are stored in the electrical domain as electrical burst signals without transforming the data into an electrical signal processible by a client entity. In other words, it is not necessary to convert the data back into the format or protocol used by the clients. Thereby, the complexity of the OBS transceiver and the latency may be reduced. Alternatively, the buffer module may be adapted to store the data bursts in the optical domain so that the originally received optical data bursts can be buffered and retransmitted according to the scheduling.

According to further embodiments, the scheduling is reviewed regularly or after a certain criterion is met in order to check if transmission requests which are routed via at least one intermediate node can be directly handled between the source network node and the destination network node or via a reduced number of intermediate network nodes. In other words, a clean-up routine may be implemented to ensure that in case of fluctuations of the network load direct scheduling is used as much as possible and indirect scheduling is only used if transmission requests are rejected by direct scheduling or direct scheduling provides a low transmission performance, i.e. the QoS of the transmission is low.

According to further embodiments, the scheduling via the at least one intermediate network node is terminated not before a new scheduling is established. Thereby, loss of data bursts due to reorganization of the scheduling is minimized.

According to a further aspect, an optical transceiver for an optical burst switching network is described. The optical transceiver comprises an optical interface for coupling to an optical burst switching network; a client interface for coupling to a client transmitting and receiving entity; and an optical receiving path between the optical interface and the client interface comprising at least one optical receiver. The transceiver further comprises an optical transmitting path between the client interface and the optical interface comprising at least one optical transmitter; and at least one buffer connecting the optical receiving path with the optical transmitting path for buffering data received from a source network node or another intermediate node to be transmitted by the optical transceiver acting as intermediate network node to a destination network node or another intermediate network node.

By means of the optical transceiver it is possible to obtain an efficient use of the OBS network due to the buffer acting as decoupling element providing a decoupling of the scheduling within the receiving path from the scheduling within the transmitting path.

According to further embodiments, the optical transceiver comprises means for determining if received data have to be buffered for further transmission or transferred to the client interface. Preferably, the optical transceiver is instructed by means of a control packet how to handle a received data burst. According to the information contained within the control packet, the received data are either stored within the buffer or transmitted to the client transmitting and receiving entity. Alternatively, the optical transceiver is instructed based on pre-configured scheduling information.

According to further embodiments, the optical transceiver comprises means for determining if data provided at the client interface or data provided by the buffer have to be transmitted by the optical transmitter. Similarly to the receiving situation mentioned above, the optical transceiver is instructed by means of a control packet which data have to be transmitted, i.e. either data stored within the buffer or data provided by the client transmitting and receiving entity via the client interface. Alternatively, the optical transceiver is instructed based on pre-configured scheduling information.

It should be noted that the methods and systems including its preferred embodiments as outlined in the present patent application may be used stand-alone or in combination with the other methods and systems disclosed in this document. Furthermore, all aspects of the methods and systems outlined in the present patent application may be arbitrarily combined. In particular, the features of the claims may be combined with one another in an arbitrary manner. Further, if not explicitly indicated otherwise, embodiments of the invention can be freely combined with each other.

The invention is explained below in an exemplary manner with reference to the accompanying drawings, wherein
Fig. 1 shows a schematic view of an example optical burst network comprising a plurality of network nodes;
Fig. 2 illustrates an indirect scheduling of a transmission request via an intermediate network node;
Fig. 3 shows an example method for scheduling transmission requests in an optical burst network based on a flow-chart;
Fig. 4 shows an example optical transceiver with an electrical buffer for the use in an optical burst network; and
Fig. 5 shows an example optical transceiver with an optical buffer for the use in an optical burst network.

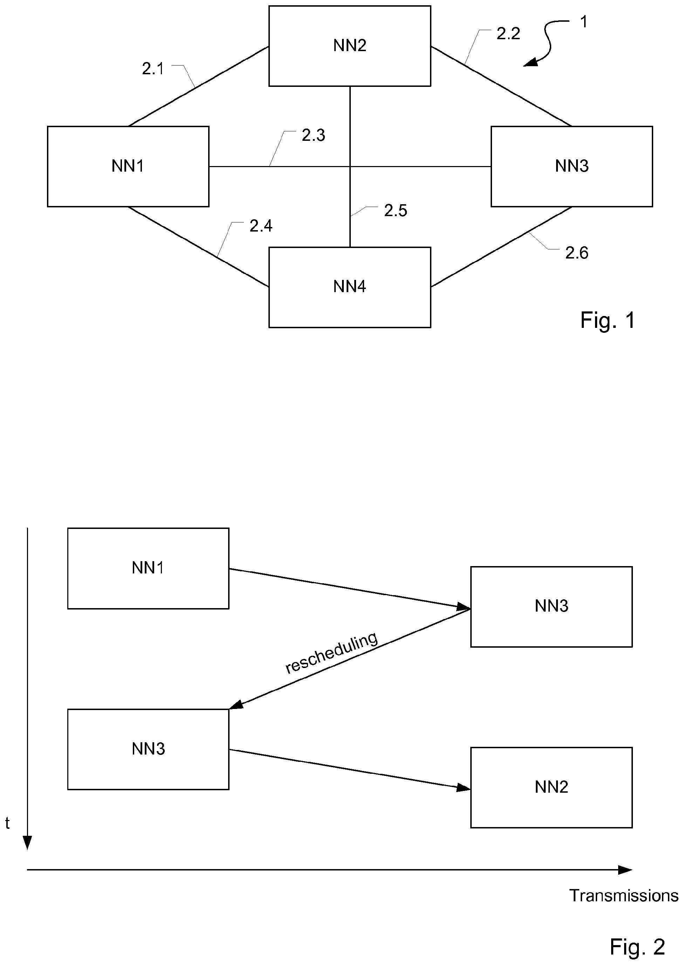

Fig. 1 shows a schematic structure of an optical burst switching (OBS) network 1. Said OBS network 1 comprises a plurality of network nodes NN1 - NN4. The network nodes NN1 - NN4 may be connected via a plurality of communication links 2.1 - 2.6, which are preferably constituted by at least one fiber for establishing a bidirectional optical link. Said bidirectional link may be constituted by a single fiber providing communications in both directions, or at least one pair of fibers wherein each fiber provides a communication link for a certain direction. Preferably, wavelength division multiplexing technology may be used for enhancing the transmission capability of the OBS network 1.

For example, data should be transmitted from a first network node NN1 to a third network node NN3. A respective transmission request may be received by the first network node NN1. Said transmission request may be triggered by a client device requesting a certain set of data, e.g. document data located in a remote database, wherein the remote database coupled with the first network node NN1 and the client device coupled with the third network node NN3 are connected via said OBS network 1. For transmitting the requested data, said data may be arranged in a plurality of data bursts, wherein said data bursts may be transmitted independently via the OBS network 1. In other words, the data burst is the basic data item to be transmitted via the OBS network 1. Another example is the provisioning of a permanent communication link between two network nodes, providing a fixed frequency of busts between these two nodes, supporting a communication link of fixed bandwidth. A scheduling of the data transmission may be performed. It is assumed that there is a standard direct scheduling for performing transmission requests directly between the source network node (first network node NN1) and the destination network node (network node NN3) within said OBS network 1. Based on said standard direct scheduling, a data burst associated with the request may be transmitted directly via communication link 2.3 from the network node NN1 to the network node NN3 using OBS.

If there are no free transmission resources on said direct communication link 2.3 for the data to be transmitted, because, for example, all time slots are occupied by another transmission, the data burst may be scheduled and transmitted via an intermediated network node. According to the example shown in Fig. 2, the data transmission is scheduled via the intermediate network node NN2 if network resources are available on the communication links 2.1, 2.2 from the source network node NN1 to the intermediate network node NN2, respectively, from the intermediate network node NN2 to the destination network node NN3. In other words, the data burst is not directly scheduled from the source network node NN1 to the destination network node NN3 but scheduled via at least one further network node, namely the intermediate network node NN2 in order to achieve a higher efficiency in transmitting data.

The data to be transmitted via the intermediate network node NN2 may be all requested data to be transmitted or a subset of said data. Preferably, the data may be segmented into data bursts according to requirements provided by the OBS network 1, e.g. a control entity of the OBS network 1. Therefore, it is possible to schedule different subsets of data bursts via different network paths, e.g. a first subset of data bursts directly from the source network node NN1 to the destination network node NN3 and a second subset of data bursts indirectly from the source network node NN1 via the intermediated network node NN2 to the destination network node NN3.

Still referring to Fig. 2, as first step, the transmission of at least one data burst may be scheduled and said at least one data burst may be transmitted to the intermediate network node NN2. After transmitting the at least one data burst to the intermediate network node NN2, the data burst may be rescheduled within the intermediate node. For example, different time slots may be used for transmitting the data bursts from the source network node NN1 to the intermediate network node NN2, respectively, from the intermediate network node NN2 to the destination network node NN3. So, while rescheduling a change of timeslots may be performed. Additionally, the data bursts may be buffered after receiving until they can be transmitted to the destination network node NN3 according to the independent schedule between the intermediate network node NN2 and the destination network node NN3.

The steps of scheduling and transmitting data bursts from the source network node NN1 to the intermediate network node NN2, rescheduling within the intermediate network node NN2, and scheduling and transmitting data bursts from the intermediate network node NN2 to the destination network node NN3 are subsequent steps which are preferably performed after the respective prior step is finished. Alternatively, there may be an overlap in time between successive steps, e.g. transmitting the data burst of the prior step and transmitting the control packet for scheduling the following transmission. Alternatively, in case of pre-computed scheduling, the steps of scheduling and of bust transmission may be separated, with scheduling being completed before burst transmission for the scheduled requests starts.

Preferably, before rescheduling, the data bursts are converted in the intermediate node from the optical domain into the electrical domain resulting in an electrical burst signal. Within the electrical domain, the electrical burst signal may be regenerated using regeneration mechanisms well-known in prior art. For example, there may be a 3R-regeneration, i.e. the data signal may be regenerated in three domains, namely power, shape and signal form. Also a limited regeneration using a part of said domains, e.g. only power regeneration is possible. The data signal representing the data burst may be stored in a buffer within the electrical domain until it is possible to transmit the data burst again on the further section of the transmission path according to the scheduling for the second transmission path. Said storing may be performed using a FIFO-storage (first in first out), so the data bursts are transmitted according to the sequence they were stored within the storage. However, it should be noted that the data busts need not be converted into a different format or protocol, in particular they do not need to be converted into the client signal as this conversion may not be transparent to the client signal due to added signal latency or jitter introduced into the signal. Before retransmitting, the electrical burst signal contained within the storage is converted into the optical domain in order to obtain again optical data bursts to be transmitted.

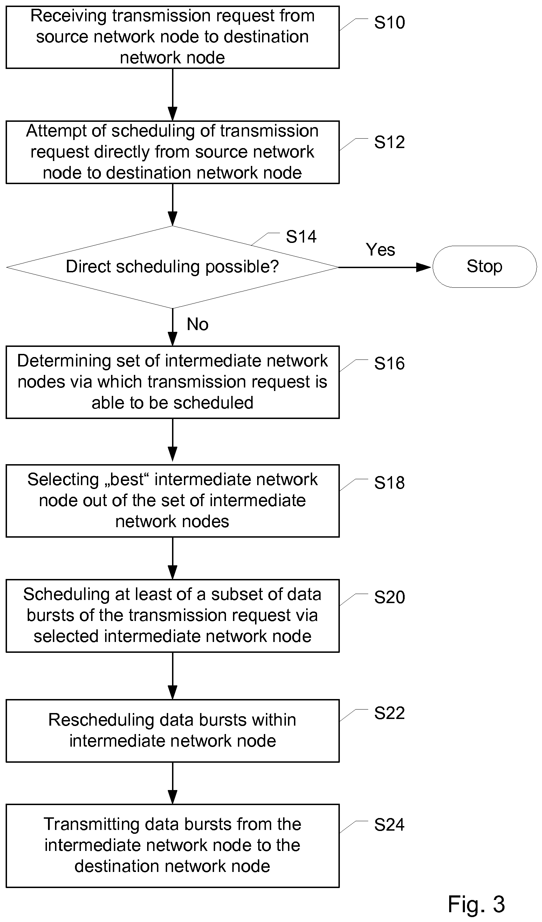

In the following, an example method for scheduling data bursts through the OBS network is explained in detail based on Fig. 3. At the beginning, a transmission request is received requesting a transmission of at least one data burst from a source network node to a destination network node (step S10). In a first step, it is attempted to schedule the transmission request directly from the source network node to the destination network node (step S12). The complete transmission path for transmitting the at least one data burst may be chosen based on the result of a computational routine which uses heuristics and optimization routines for achieving an optimal or nearly optimal transmission path from source to destination for said transmission request. Typically, the optimal or nearly optimal transmission path comprises a plurality of transmission path sections between the source network node and the destination network node, so it is mandatory to have free transmission capacities on all of said transmission path sections. So, the situation may occur that there is a bottleneck at one or a view of said transmission path sections of the chosen optimal or nearly optimal transmission path wherein the other transmission path sections have free transmission capacities. In consequence, no data may be transmitted.

It should be noted that a transmission path may be an entity in the space domain, e.g. using a particular fiber, or in the optical spectrum domain, e.g. using a particular wavelength, or in the time domain, e.g. using a particular time interval (e.g. a time slot), or any combination thereof, to transmit a data burst.

Following up, it is checked if a direct scheduling of all data bursts of the transmission request using the optimal or nearly optimal transmission path is possible (step S14). If all data bursts can be scheduled directly, the scheduling method is stopped and the data bursts are transmitted directly (without using a rescheduling within an intermediate network node) via said optimal or nearly optimal transmission path.

If not all data bursts can be scheduled via said optimal or nearly optimal transmission path, intermediate network nodes are determined via which at least a subset of data burst correlated with the transmission request is able to be scheduled (step S16). For example, all network nodes NN1-NN4 except the source network node and the destination network node may subsequently be selected and checked if the transmission path from the source network node to the selected intermediate network node and the transmission path from the selected intermediate network node to the destination network node provide free network resources. All intermediate network nodes which provide free network resources for said transmission request may be recorded. In embodiments, a pre-selection of potential network nodes is performed, selecting network nodes as candidates for intermediate nodes, e.g. based on available information about the network topology or results of previous schedules.

After checking of all network nodes NN1-NN4 except the source network node and the destination network node, one intermediate network node out of the set of recorded intermediate network nodes providing free network resources for said transmission request is selected (step S18) based on certain criteria, e.g. the intermediate network node is selected which provides the highest quality of service (QoS) for said transmission request, specifically a latency as low as possible. For example, the intermediate network node is selected based on which the sum of latencies occurring due to the transmission between the source network node and the intermediate network node, respectively, between the intermediate network node and the destination network node is minimal.

Following up, the transmission request is scheduled from the source network node to the intermediate network node followed by the transmission of the at least one data burst from the source network node to the intermediate network node (step S20). The data burst may be rescheduled for the following transmission via the transmission path between the intermediate network node and the destination network node (step S22). Said rescheduling may comprise interchanging the time slot in which the data burst is conveyed. Also some sort of regeneration of the data burst signal may be performed within the intermediate network node.

Finally, the at least one data burst is transmitted from the intermediate network node to the destination network node (step S24). The above process may be repeated until all data bursts are successfully transmitted to the destination node.

The situation may occur that even considering a transmission of the data burst via one intermediate network node may not or not completely be able to be scheduled because of poor free network resources. In that case, it may be possible to attempt transmitting the transmission request via two or more intermediate network nodes. For example, the transmission of data burst may be scheduled from the source network node to a first intermediate network node, rescheduled in the first intermediate network node, transmitted from the first intermediate network node to a second intermediate network node, rescheduled in the second intermediate network node and finally transmitted from the second intermediate network node to a destination intermediate network node. Of course, the process may be extended and further intermediate nodes considered.

Alternatively, it may be possible to split the data bursts associated to a transmission request into at least two subsets of data bursts, e.g. a first and a second subset of data bursts. The first set of data bursts may contain as many data bursts as being able to be scheduled directly from the source network node to the destination network node due to free network resources. The remaining data bursts may be scheduled independently via at least one intermediate network node. In other words, it is attempted to transmit as many data bursts directly from the source network node to the destination network node using free time slots on the respective direct transmission path from source to destination. If there are remaining data bursts which cannot be transmitted directly, the transmission of said remaining data bursts is scheduled via at least one intermediate node.

Preferably, there is a clean-up routine which adapts the scheduling obtained based on long-term evaluations according to changes of the transmission network load. The clean-up routine may check if transmission requests which were regularly scheduled via at least one intermediate node may now be able to be scheduled directly. For example, it may be possible to adapt the scheduling each time after an indirect scheduling has been performed, regularly after a certain period of time, or when a certain threshold has been crossed, e.g. a certain number of time slots are freed or the number of handled transmission requests falls below a threshold value.

Preferably, scheduling changes are not executed before the new scheduling is implemented. Thereby, the situation may occur that data bursts are sent twice, on the one hand via the former indirect transmission path and on the other hand via the direct transmission path as a result of the clean-up routine. As a result, there may be data bursts received twice at the destination network node. Said duplicated data bursts may preferably be removed at the respective destination network node.

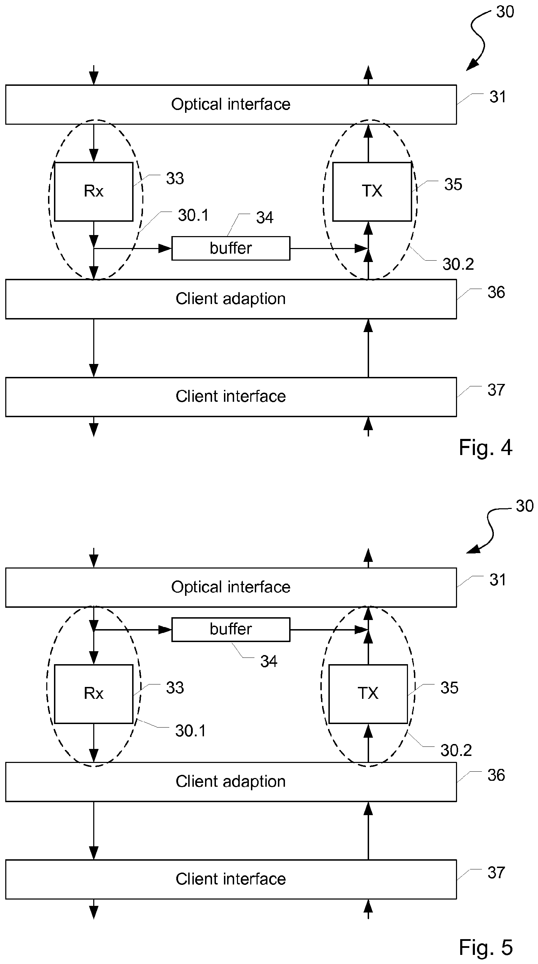

Fig. 4 and 5 illustrate example architectural implementations of an OBS transceiver 30 adapted to be used within a network node NN1 - NN4 of the OBS network 1. The OBS transceiver 30 comprises an optical interface 31 adapted to couple the transceiver 30 with an OBS network 1. The optical interface 31 may comprise at least one pair of ports for connecting optical fibers, namely one receiving port and one transmitting port. If the bidirectional communication is realized by means of a single fiber, only one port may be necessary.

Downstream in a receiving path 30.1, the interface 31 is followed by an optical receiver 33 which provides a conversion from the optical domain into the electrical domain. In other words, the optical data burst is converted into an electrical burst signal by the optical receiver 33. Said optical receiver 33 may be realized by any appropriate opto-electric conversion means, e.g. a photo diode. Preferably, the optical receiver 33 is a WDM or DWDM receiver which is adapted to receive a certain wavelength out of a plurality of wavelengths, either with a constant wavelength or a certain wavelength associated to the respective burst.

The OBS transceiver 30 further comprises a buffer module 34 adapted to buffer a plurality of electrical burst signals which were received at the OBS transceiver 30 as data bursts and converted into the electrical domain. Preferably, the buffer module 34 is adapted to store data as a set of data, wherein a set of data comprises all data associated with a received data burst. Thereby it is possible to buffer bundles of data according to the received data bursts which may have to be rescheduled and transmitted to a further network node NN1 - NN4. The buffer module 34 may be, for example, a memory module working in the electrical domain according to the principle of FIFO memory, i.e. the data which have been stored first will also be output first. Preferably, the data stored within the buffer module 34 are the data of the optical data burst transferred into the electrical domain. Preferably, the stored data are different to the data which may be transferred to the client transmitting and receiving entity in order to reduce the complexity of the optical transceiver and in order to limit the latency added by the indirect scheduling.

Alternatively, a buffer working in the optical domain may be used for buffering the received optical data bursts. Therefore, the buffer may be located between the receiving path 30.1 and the transmitting path 30.2 upstream before the optical receiver 33 and the optical transmitter 35 (see Fig. 5).

Depending on the scheduling of the OBS transceiver 30, the data output by the optical receiver 33 may be stored within the buffer module 34 for further retransmission to a further network node, specifically the destination network node or the next intermediate node. In that case, the OBS receiver 30 acts as intermediated network node. Otherwise, the data burst received at the optical receiver 33 may be scheduled for a client transmitting and receiving entity coupled to the OBS transceiver 30. In that case, the electrical burst signal may be provided to said client transmitting and receiving entity. For coupling the client transmitting and receiving entity to the optical transceiver, the optical transceiver comprises a client interface 37 providing respective coupling means.

There may also be a client adaption module 36 located between the optical receiver 33 and the client interface 37. The client adaption module may be adapted to convert the received electrical burst signal into a client signal processible by the client transmitting and receiving entity (e.g. a specific burst format into a common data format, for example IP-packets). In addition, the client adaption module 36 may be adapted to convert the client signal (e.g. IP-packets) provided by the client transmitting and receiving entity via the client interface 37 into a specific burst format. Furthermore, the client adaption module 36 may provide further mechanisms for monitoring the client signal and the transmission of the client signal via the OBS network 1, e.g. detection of transmission errors, failure alarms, counters etc...

Finally, the OBS transceiver comprises an optical transmitter 35 adapted to convert an electrical burst signal into an optical burst signal. Said optical transmitter 35 may be realized by any appropriate electro-optic conversion means, e.g. a light emitting diode or a laser diode. Preferably, the optical transmitter 35 may comprise a fixed wavelength for transmitting the optical signal. Alternatively, the optical transmitter 35 may be constituted by a wavelength-tunable laser diode.

The electrical burst signal to be sent by the OBS transceiver 30 may be provided either by the buffer module 34 or by the client transmitting and receiving entity coupled to the client interface of the OBS transceiver 30. The scheduling of the transmission path 30.2 may decide which electrical burst signal is on turn to be sent.

By means of the buffer module 34, a decoupling of the scheduling controlling the receiving path and the scheduling controlling the transmission path is realized. By buffering the electrical or optical burst signal it is possible to reschedule the electrical or optical burst signal according to the scheduling of the transmission path 30.2.

It should be noted that the description and drawings merely illustrate the principles of the proposed methods and systems. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the proposed methods and systems and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Finally, it should be noted that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. Method for scheduling data through an optical burst switching (OBS) network (1) comprising a plurality of network nodes (NN1-NN4), the method comprising the following steps:
- receiving a transmission request for transmitting data from a source network node to a destination network node;
- determining if a direct scheduling of the transmission request from the source network node to the destination network node is possible; and **characterized by** the following steps:
- if no direct scheduling is possible, determining an intermediate network node different from the source network node and the destination network node;
- scheduling the transmission of at least a subset of the data to be transmitted from the source network node to the destination network node from the source network node to the intermediate network node;
- scheduling the transmission of the subset of data from the intermediate network node to the destination network node, wherein the scheduling of data from the source network node to the intermediate network node and the scheduling of data from the intermediate network node to the destination network node are independent of each other.

2. The method according to claim 1, wherein a first subset of data to be transmitted is scheduled directly from the source network node to the destination network node without scheduling via the intermediate node and at least a second subset of data is scheduled via the intermediate network node.

3. The method according to claim 1 or 2, wherein determining the intermediate network node comprises the steps of:
- determining a plurality of network nodes distinct from the source network node and the destination network node;
- for each determined network node, checking if a first transmission between the source network node and said determined network node is possible and determining information regarding the Quality of Service of said first transmission;
- for each determined network node, checking if a second transmission between said determined network node and the destination network node is possible and determining information regarding the Quality of Service of said second transmission;
- ranking the determined network nodes for which first and second transmissions are possible based on the Quality of Service information of first and second transmissions;
- choosing the determined network node based on the Quality of Service information of the first and second transmissions.

4. The method according to claim 1 or 2, wherein determining the intermediate network node comprises the steps of:
- determining a plurality of network nodes distinct from the source network node and the destination network node;
- selecting a single network node out of the plurality of network nodes arbitrarily or based on statistical information.

5. The method according to claim 3 or 4, wherein all network nodes except the source network node and the destination network node are used for determining the intermediate network node.

6. The method according to anyone of the preceding claims, wherein a further intermediate network node is determined if scheduling of the transmission of the subset of data between the intermediate network node and the destination network node is not possible within a predefined Quality of Service (QoS) or not at all, and at least a portion of the subset of data are scheduled via the further intermediate network node.

7. The method according to claim 6, wherein the at least two intermediate network nodes are chosen based on a ranking providing information regarding the Quality of Service (QoS) of the respective intermediate network node, respectively, the Quality of Service (QoS) of the transmission paths to/from the respective intermediate network node.

8. The method according to any of claims 1 to 5, wherein at least two intermediate network nodes are chosen arbitrarily or based on statistical information.

9. The method according to anyone of the preceding claims, wherein the data are rescheduled within the intermediate network node.

10. The method according to anyone of the preceding claims, wherein the data are buffered within the intermediate network node.

11. The method according to claim 10, wherein the data are buffered in the electrical domain using a first-in-first-out (FIFO) repository.

12. The method according to anyone of the preceding claims, wherein the scheduling is reviewed regularly or after a certain criterion is met in order to check if transmission requests which are routed via at least one intermediate node can be directly handled between the source network node and the destination network node or via a reduced number of intermediate network nodes.

13. The method according to claim 12, wherein the scheduling via the at least one intermediate network node is terminated not before the new scheduling is established.

## Patentansprüche

1. Verfahren für die Einplanung von Daten durch ein optisches Burst-Switching-Netzwerk (OBS-Netzwerk, 1), eine Vielzahl von Netzknoten (NN1-NN4) umfassend, wobei das Verfahren die folgenden Schritte umfasst:
- den Empfang einer Übermittlungsanforderung zur Übermittlung von Daten von einem Quellnetzknoten an einen Zielnetzknoten;
- das Bestimmen, ob ein direktes Einplanen der Übermittlungsanforderung von dem Quellnetzknoten an den Zielnetzknoten möglich ist;
und **gekennzeichnet durch** die folgenden Schritte:
- wenn kein direktes Einplanen möglich ist, das Bestimmen eines Zwischennetzknotens, der ein anderer Netzknoten als der Quellnetzknoten und als der Zielnetzknoten ist;
- das Einplanen der Übermittlung von mindestens einem Teilsatz der von dem Quellnetzknoten an den Zielnetzknoten zu übermittelnden Daten vom Quellnetzknoten an den Zwischennetzknoten;
- das Einplanen der Übermittlung des Teilsatzes von Daten von dem Zwischennetzknoten an den Zielnetzknoten, wobei die Einplanung der Datenübermittlung vom Quellnetzknoten an den Zwischennetzknoten und die Einplanung der Datenübermittlung vom Zwischennetzknoten an den Zielnetzknoten unabhängig voneinander erfolgen.

2. Das Verfahren nach Anspruch 1, wobei ein erster Teilsatz zu übermittelnder Daten direkt zur Übermittlung vom Quellnetzknoten an den Zielnetzknoten eingeplant wird, ohne über den Zwischennetzknoten eingeplant zu werden, und wobei mindestens ein zweiter Teilsatz von Daten über den Zwischennetzknoten eingeplant wird.

3. Das Verfahren nach Anspruch 1 oder 2, wobei das Bestimmen des Zwischennetzknotens den folgenden Schritte umfasst:
- das Bestimmen einer Vielzahl von Netzknoten, die nicht dem Quellnetzknoten und nicht dem Zielnetzknoten entsprechen;
- das Prüfen für jeden ermittelten Netzknoten, ob eine erste Übermittlung zwischen dem Quellnetzknoten und besagtem bestimmtem Netzknoten möglich ist, und das Bestimmen von Informationen zur Dienstgüte der besagten ersten Übermittlung;
- das Prüfen für jeden ermittelten Netzknoten, ob eine zweite Übermittlung zwischen besagtem bestimmtem Netzknoten und dem Zielnetzknoten möglich ist, und das Bestimmen von Informationen zur Dienstgüte der besagten zweiten Übermittlung;
- das Einstufen der bestimmten Netzknoten, für welche erste und zweite Übermittlungen möglich sind, auf der Grundlage der Dienstgüteinformationen erster und zweite Übermittlungen;
- die Auswahl des bestimmten Netzknotens auf der Grundlage der Dienstgüteinformationen zur ersten und zur zweiten Übermittlung.

4. Das Verfahren nach Anspruch 1 oder 2, wobei das Bestimmen des Zwischennetzknotens die folgenden Schritte umfasst:
- das Bestimmen einer Vielzahl von Netzknoten, die nicht dem Quellnetzknoten und nicht dem Zielnetzknoten entsprechen;
- die Auswahl eines einzelnen Netzknotens aus der Vielzahl von Netzknoten, was entweder willkürlich oder auf der Grundlage statistischer Informationen erfolgt.

5. Das Verfahren nach Anspruch 3 oder 4, wobei alle Netzknoten außer dem Quellnetzknoten und dem Zielnetzknoten dazu benutzt werden, um den Zwischennetzknoten zu bestimmen.

6. Das Verfahren nach einem jeglichen der vorgenannten Ansprüche, wobei ein weiterer Zwischennetzknoten bestimmt wird, wenn das Einplanen der Übermittlung des Teilsatzes von Daten zwischen dem Zwischennetzknoten und dem Zielnetzknoten nicht im Rahmen einer vordefinierten Dienstgüte (Quality of Service, QoS) oder generell nicht möglich ist, und wobei zumindest ein Teil des Teilsatzes von Daten zur Übermittlung über den weiteren Zwischenknoten eingeplant wird.

7. Das Verfahren nach Anspruch 6, wobei mindestens zwei Zwischennetzknoten auf der Grundlage einer Einstufung ausgewählt werden, welche Informationen zur Dienstgüte (QoS) der jeweiligen Zwischennetzknoten bzw. zur Dienstgüte (QoS) der Übermittlungspfade zum entsprechenden Zwischennetzknoten oder von diesem her zur Verfügung stellt.

8. Das Verfahren nach einem jeglichen der Ansprüche 1 bis 5, wobei mindestens zwei Zwischennetzknoten willkürlich oder auf der Grundlage statistischer Informationen ausgewählt werden.

9. Das Verfahren nach einem jeglichen der vorgenannten Ansprüche, wobei die Daten in dem Zwischennetzknoten neu eingeplant werden.

10. Das Verfahren nach einem jeglichen der vorgenannten Ansprüche, wobei die Daten in dem Zwischennetzknoten gepuffert werden.

11. Das Verfahren nach Anspruch 10, wobei die Daten in der elektrischen Domain durch einen First-in-first-out-Speicher (FIFO-Speicher) gepuffert werden.

12. Das Verfahren nach einem jeglichen der vorgenannten Ansprüche, wobei die Einplanung regelmäßig oder nach Erfüllung bestimmter Kriterien überprüft wird, um zu prüfen, ob Übermittlungsanforderungen, die über mindestens einen Zwischennetzknoten geroutet werden, direkt zwischen dem Quellnetzknoten und dem Zielnetzknoten oder über eine niedrigere Zahl von Zwischennetzknoten abgewickelt werden können.

13. Das Verfahren nach Anspruch 12, wobei die Einplanung über den mindestens einen Zwischennetzknoten nicht vor erfolgter neuer Einplanung beendet wird.

## Revendications

1. Procédé de planification de données par l'intermédiaire d'un réseau à commutation optique par rafales (OBS) (1) comprenant une pluralité de noeuds de réseau (NN1-NN4), le procédé comprenant les étapes suivantes :
- recevoir une demande de transmission pour transmettre des données entre un noeud de réseau source et un noeud de réseau de destination ;
- déterminer si une planification directe de la demande de transmission entre le noeud de réseau source et le noeud de réseau de destination est possible ;
et **caractérisé par** les étapes suivantes :
- si aucune planification directe n'est possible, déterminer un noeud de réseau intermédiaire différent du noeud de réseau source et du noeud de réseau de destination ;
- planifier la transmission d'au moins un sous-ensemble des données devant être transmises entre le noeud de réseau source et le noeud de réseau de destination entre le noeud de réseau source et le noeud de réseau intermédiaire ;
- planifier la transmission du sous-ensemble de données entre le noeud de réseau intermédiaire et le noeud de réseau de destination, dans lequel la planification de données entre le noeud de réseau source et le noeud de réseau intermédiaire et la planification de données entre le noeud de réseau intermédiaire et le noeud de réseau de destination sont indépendantes l'une de l'autre.

2. Procédé selon la revendication 1, dans lequel un premier sous-ensemble de données devant être transmises est planifié directement entre le noeud de réseau source et le noeud de réseau de destination sans planification par le biais du noeud intermédiaire et au moins un deuxième sous-ensemble de données est planifié par le biais du noeud de réseau intermédiaire.

3. Procédé selon la revendication 1 ou 2, dans lequel la détermination du noeud de réseau intermédiaire comprend les étapes suivantes :
- déterminer une pluralité de noeud de réseau différents du noeud de réseau source et du noeud de réseau de destination ;
- pour chaque noeud de réseau déterminé, vérifier si une première transmission entre le noeud de réseau source et ledit noeud de réseau déterminé est possible et déterminer des informations concernant la qualité de service de ladite première transmission ;
- pour chaque noeud de réseau déterminé, vérifier si une deuxième transmission entre ledit noeud de réseau déterminé et le noeud de réseau de destination est possible et déterminer des informations concernant la qualité de service de ladite deuxième transmission ;
- classer les noeud de réseau déterminés pour lesquels les première et deuxième transmissions sont possibles sur la base des informations de qualité de service des première et deuxième transmissions ;
- choisir le noeud de réseau déterminé sur la base des informations de qualité de service des première et deuxième transmissions.

4. Procédé selon la revendication 1 ou 2, dans lequel la détermination du noeud de réseau intermédiaire comprend les étapes suivantes :
- déterminer une pluralité de noeuds de réseau différents du noeud de réseau source et du noeud de réseau de destination ;
- sélectionner un noeud de réseau unique parmi la pluralité de noeud de réseau de manière arbitraire ou sur la base d'informations statistiques.

5. Procédé selon la revendication 3 ou 4, dans lequel tous les noeuds de réseau, à l'exception du noeud de réseau source et du noeud de réseau de destination, sont utilisés pour déterminer le noeud de réseau intermédiaire.

6. Procédé selon l'une quelconque des revendications précédentes, dans lequel un noeud de réseau intermédiaire supplémentaire est déterminé si la planification de la transmission du sous-ensemble de données entre le noeud de réseau intermédiaire et le noeud de réseau de destination n'est pas possible dans une qualité de service (QoS) prédéfinie ou n'est pas possible du tout, et au moins une partie du sous-ensemble de données est planifiée par l'intermédiaire du noeud de réseau intermédiaire supplémentaire.

7. Procédé selon la revendication 6, dans lequel les au moins deux noeuds de réseau intermédiaires sont choisis sur la base d'un classement fournissant des informations concernant la qualité de service (QoS) du noeud de réseau intermédiaire respectif, respectivement, la qualité de service (QoS) des voies de transmission vers/depuis le noeud de réseau intermédiaire respectif.

8. Procédé selon l'une quelconque des revendications 1 à 5, dans lequel au moins deux noeuds de réseau intermédiaires sont choisis arbitrairement ou sur la base d'informations statistiques.

9. Procédé selon l'une quelconque des revendications précédentes, dans lequel les données sont à nouveau planifiées dans le noeud de réseau intermédiaire.

10. Procédé selon l'une quelconque des revendications précédentes, dans lequel les données sont mises en mémoire tampon dans le noeud de réseau intermédiaire.

11. Procédé selon la revendication 10, dans lequel les données sont mises en mémoire tampon dans le domaine électrique en utilisant un référentiel premier entré premier sorti (FIFO).

12. Procédé selon l'une quelconque des revendications précédentes, dans lequel la planification est revue régulièrement ou une fois qu'un certain critère est satisfait afin de vérifier si les demandes de transmission, qui sont acheminées par l'intermédiaire d'au moins un noeud intermédiaire, peuvent être directement prises en charge entre le noeud de réseau source et le noeud de réseau de destination ou par le biais d'un nombre réduit de noeuds de réseau intermédiaires.

13. Procédé selon la revendication 12, dans lequel la planification par l'intermédiaire de l'au moins un noeud de réseau intermédiaire n'est interrompue qu'une fois la nouvelle planification établie.
